# EUROPEAN PATENT SPECIFICATION

(11) **EP 1 626 250 B1**
(45) Date of publication and mention of the grant of the patent: **19.05.2010**
(21) Application number: 04019286.6
(22) Date of filing: 13.08.2004
(51) Int. Cl.: G01C 21/34

(54) **Vehicle navigation system**
Fahrzeugnavigationssystem
Système de navigation pour véhicules

(43) Date of publication of application: 15.02.2006
(73) Proprietor: Alpine Electronics, Inc., Tokyo (JP)
(72) Inventor: Wittig, Dirk, 68542 Heddesheim (DE)
(74) Representative: Klunker . Schmitt-Nilson . Hirsch

(56) References cited:
- EP-A- 1 187 082
- FR-A- 2 743 655
- US-A- 5 220 507
- US-A1- 2003 023 370

## Description

### BACKGROUND OF THE INVENTION

### 1. Field of the invention

The present invention relates to an electronic route display system, an electronic route display method, and a vehicle navigation system comprising such electronic route display system. The system and the method can be used for a vehicle navigation system or for a computerized route searching and calculation system and road book visualisation. In case of a vehicle navigation system, the route display system comprises a display screen for displaying a guidance route on a map and optionally in addition a turn direction arrow mark indicating the direction in which the vehicle should to turn at an intersection when the vehicle approaches the intersection.

### 2. Description of the related art

FR-A-2 743 655 discloses a vehicle navigation system comprising a display screen having a main display part for displaying guidance information and a separate display part displaying a rotatable destination direction arrow pointing towards the destination like a compass needle and for displaying the current distance to the destination. The display of the main display part depends on the current position relative to a respective intersection on the guided route. In a first phase, before closely approaching the intersection, the main display part displays an intersection symbol, an intersection direction arrow positioned below the intersection symbol and pointing towards the intersection symbol and having a rotational position to indicate the direction towards the approached intersection like a compass needle, and the distance in meters to the approached intersection. In a second phase, when approaching closer the intersection, the main display part still displays the intersection symbol and the intersection direction arrow like in the first phase, however in a smaller scale and shifted towards a side edge of the main display part. Besides the intersection symbol and the intersection direction arrow, the main display part now displays, in the form of a real street direction sign, the street name of the next street to be taken when exiting the intersection, and the name of a city reachable on the next street. In a third phase, when approaching very closely the intersection, the display of the main display part is maintained with the sole difference that the intersection direction arrow is now above the intersection symbol and points away from the intersection symbol towards the next street to be taken. In a fourth phase, after exiting the intersection, the main display part displays an invitation to follow for a certain distance the next street (now current street) with displaying its street name and the city reachable on the next street.

EP-A-1 187 082 discloses a display device displaying a map and an arrow-shaped symbol for displaying road traffic information. The color of an inner area of the arrow-shaped symbol depends on the particular traffic situation (no congestion, congestion to some extent, congestion, speed regulation) and the color of an outer contour of the arrow-shaped symbol depends on the road type (blue for express way and white for ordinary way).

US-A-2003 0023370 discloses a navigation system which, in one of its modes of operation, displays a maneuver list providing turn-by-turn instructions for a recommended route. The next street name in the maneuver list is displayed with inverse background and street name characters.

A navigation system of the prior art detects the position of a vehicle and reads map data for the area around the vehicle position from a map-information recording medium such as a CD-ROM, a DVD-ROM, a HDD (Hard Drive Disk), a memory card, a memory stick, or the like. Then, the navigation system displays a map image on a display screen and displays a mark indicating a current position of the vehicle. Such a navigation system has a route guidance function. Therefore, the navigation system can search for a route that leads from a start point to a destination. When the vehicle approaches an intersection, the display on the display screen of the navigation system may change from map-guidance to arrow-guidance to designate a guidance travelling direction for the vehicle at a particular intersection by an arrow mark, or an arrow mark is superposed to the map display of the intersection. In case of a navigation system disclosed in US-B2-6 643 585, the navigation guidance display comprises a current street name display part in a lower area of the display screen, a next street name display part in an upper region of the display screen, and an arrow mark indicating turn direction guidance for the intersection the vehicle is approaching.

Similar guidance display information is disclosed in the Owner's Manual related to the navigation map SMART MAP PRO NVD-Z 001 DVD from ALPINE, program version Z1.00, to be used for the GPS-car navigation system NVE-N 099 P from ALPINE.

Indicating the next street name in a separate next street display part of the display screen is helpful and enhancing the safety as the driver is less distracted than in case he would have to find out the next street name on the map display part of the display screen. Distraction of the driver can be reduced further by displaying a turn direction arrow mark and/or by displaying the current street name in a separate current street name display part on the display screen.

### SUMMARY OF THE INVENTION

It is a general desire to improve the guidance display in a way that the driver is enabled to gather the guidance information from the display screen at a glance as quick as possible in order to distract the driver from the traffic as little as possible.

It is a particular desire to display on a route guidance display screen route guidance such that the driver can associate the guidance display on the route guidance display screen to the real street situation as easily and quickly as possible.

The display screen belongs to a vehicle navigation system or to a computer, such as a PC (Personal Computer), a notebook, a laptop, a PDA (Personal Digital Assistant), a mobile telephone, or the like. If in the following and in the claims, the term computer or computer system is used without further explanation, it is to comprise all above-mentioned types of computers and mobile phones and the like. The display screen is adapted to be controlled to display route guidance information and/or display road book or maneuver lists.

In order to achieve this desire, the invention provides an electronic route display system according to claim 1, a vehicle navigation system according to claim 10, a computer system according to claim 11, and an electronic route display method according to claim 13. Embodiments thereof are indicated in the dependent claims.

The method of the present invention can be used for displaying navigation guidance on a display screen of a vehicle navigation system or for displaying maneuver lists on a display screen of a computer of the above-mentioned types.

Under a first aspect, the invention provides an electronic route display system comprising a next street name display part on a display screen, the display system being adapted to display on the next street name display part the next street name in background and character colors that are substantially the same colors as appearing on a real street direction sign indicating the next street name.

According to this embodiment, the display system is designed to display on the next street name display part the next street name characters on a next street name background, and the display system is adapted to display on the next street name display part the next street name characters in a color that is substantially the same color as the characters of the next street name appearing on said real street direction sign indicating the next street and the next street name background in a color that is substantially the same color as the background color appearing on said real street direction sign indicating the next street.

In an embodiment of the first aspect of the invention, the display system is adapted to display on the next street name display part the next street name and/or the name of a city that can be reached by following the next street, in background and character colors that are substantially the same colors as appearing on said real street direction sign indicating the next street name and/or the name of the city.

In an embodiment of the first aspect of the invention, the display system comprises a current street name display part on said display screen, and the display system is adapted to display on the current street name display part the current street name in background and character colors that are substantially the same colors as appearing on a real street direction sign indicating the current street name.

According to this embodiment, the display system is designed to display on the current street name display part the current street name characters on a current street name background, and the display system is adapted to display on the current street name display part the current street name characters in a color that is substantially the same color as the characters of the current street name appearing on said real street direction sign indicating the current street and the current street name background in a color that is substantially the same color as the background color appearing on said real street direction sign indicating the current street name.

An embodiment of the first aspect of the invention comprises a turn direction arrow display part on the display screen, and the display system is adapted to display on the turn direction arrow display part a turn direction arrow in a color that is substantially the same color as the background color appearing on said real street direction sign indicating the next street name.

In an embodiment of the first aspect of the invention, the turn direction arrow display part is designed to display on the display screen the turn direction arrow on an arrow background, and the display system is adapted to display on the turn direction arrow display part the turn direction arrow in a color that is substantially the same color as the color of the background color of the next street name appearing on said real street direction sign indicating the next street and to display the arrow background in a color that is substantially the same color as the background color appearing on said real street direction sign indicating the current street.

An embodiment of the first aspect of the invention comprises a digital map information memory adapted to store street type data and street name data, and converting means adapted to convert the street type data into street name display color control signals controlling the display system to display the respective street names in colors that are substantially the same colors as appearing on the real street direction signs indicating said respective street names.

In an embodiment of the first aspect of the invention, the converting means is adapted to convert the street type data into street name display color control signals controlling the display system to display the respective street names and the respective street name backgrounds in colors that are substantially the same colors as appearing on the real street direction signs indicating said respective street names.

In an embodiment of the first aspect of the invention, the converting means is adapted to convert the street type data into turn direction arrow display color control signals controlling the display system to display the turn direction arrow in a color that is substantially the same color as appearing on the real street direction sign indicating the next street.

In an embodiment of the first aspect of the invention, the converting means is adapted to convert the street type data into turn direction arrow display color control signals controlling the display system to display the turn direction arrow in a color that is substantially the same color as the color of the background appearing on the real street direction sign indicating the next street and the turn arrow background in a color that is substantially the same color as the color of the background appearing on the real street direction sign indicating the current street.

In an embodiment of the first aspect of the invention, the digital map information memory is adapted to store country data in addition to street type data and street name data, and the converting means is adapted to use the country data to convert the street type data into street name display color control signals controlling the display system in dependency on the respective country data to display the respective street names in colors that are substantially the same colors as appearing on the real street direction signs of the respective country.

In an embodiment of the first aspect of the invention, the digital map information memory is adapted to store country data in addition to street type data and street name data, and the converting means is adapted to use the country data to convert the street type data into turn direction arrow display color control signals controlling the display system in dependency of the respective country data to display the respective turn direction arrow in colors that are substantially the same colors as appearing on the real street direction signs of the respective country.

Any of the above-mentioned embodiments of the first aspect of the invention can be combined with the first aspect of the invention and/or with each other.

Under a second aspect, the invention provides a vehicle navigation system comprising an electronic route display system according to the first aspect of the invention or according to any of the above-mentioned embodiments of the first aspect of the invention.

Under a third aspect, the electronic route display system according the first aspect of the invention or according to any of the above-mentioned embodiments of the first aspect of the invention, is part of a computer system of any of the above-mentioned types and is adapted to be software controlled to calculate a route between an entered start position and an entered destination and to display on a display screen a maneuver list of the the calculated route comprising street names, wherein the street names of the maneuver list are displayed in colors that are substantially the same colors as appearing on the real street direction signs indicating the respective street of the maneuver list.

In an embodiment of the third aspect of the invention, the electronic route display system according the first aspect of the invention or according to any of the above-mentioned embodiments of the first aspect of the invention, is software controlled to display on a display screen a maneuver list of the the calculated route comprising turn direction arrows, wherein the turn direction arrows of the maneuver list are displayed in colors that are substantially the same colors as appearing on the real street direction signs indicating the respective street of the maneuver list.

Under a fourth aspect, the invention provides an electronic route display method comprising the step of generating a next street name display on a next street name display part on a display screen in background and character colors that are substantially the same colors as appearing on a real street direction sign indicating the next street name.

According to the fourth aspect of the invention, the step of generating the next street name display comprises the display of the next street name characters on a next street name background, with the next street name characters being displayed in a color that is substantially the same color as the characters of next street name appearing on said real street direction sign indicating the next street and the next street name background being displayed in a color that is substantially the same color as the background appearing on said real street direction sign indicating the next street.

An embodiment of the fourth aspect of the invention comprises the step of generating a current street name display on a current street name display part on said display screen in background and character colors that are substantially the same colors as appearing on a real street direction sign indicating the current street name.

According to this embodiment, the step of generating the current street name display comprises the display of the current street name characters on a current street name background, the current street name characters being displayed in a color that is substantially the same color as the characters of the current street name appearing on said real street direction sign indicating the current street name, and the current street name background is displayed in a color that is substantially the same color as the background color appearing on said real street direction sign indicating the current street name.

An embodiment of the fourth aspect of the invention comprises the step of generating a turn direction arrow display on a turn direction arrow display part on the display screen, the turn direction arrow being displayed in a color that is substantially the same color as the background color appearing on said real street direction sign indicating the next street name.

In an embodiment of the fourth aspect of the invention, the step of generating a turn direction arrow display comprises the generation of a display of the turn direction arrow on an arrow background, the turn direction arrow being displayed in a color that is substantially the same color as the background color of the next street name appearing on said real street direction sign indicating the next street name and the arrow background being displayed in a color that is substantially the same color as the background color appearing on said real street direction sign indicating the current street name.

An embodiment of the fourth aspect of the invention comprises the steps of storing street type data and street name data in a digital map information memory, converting the street type data into street name display color control signals, and controlling, in response to the street name display color control signals, the display system to display the respective street names in colors that are substantially the same colors as appearing on the real street direction signs indicating said respective street names.

In an embodiment of the fourth aspect of the invention, the step of converting the street type data comprises conversion of the street type data into street name display color control signals controlling the display system to display the respective street names and the respective street name backgrounds in colors that are substantially the same colors as appearing on the real street direction signs indicating said respective street names.

In an embodiment of the fourth aspect of the invention, the step of converting the street type data comprises conversion of the street type data into turn direction arrow display color control signals controlling the display system to display the turn direction arrow in a color that is substantially the same color as appearing on the real street direction sign indicating the next street.

In an embodiment of the fourth aspect of the invention, the step of converting the street type data comprises conversion of the street type data into turn direction arrow display color control signals controlling the display system to display the turn direction arrow in a color that is substantially the same color as appearing on the real street direction sign indicating the next street and the turn arrow background in a color that is substantially the same color as the background color appearing on the real street direction sign indicating the current street.

An embodiment of the fourth aspect of the invention comprises the steps of storing country data in the digital map information memory in addition to the street type data and the street name data, converting the street type data into street name display color control signals depending on the country data, and controlling, on the basis of said country data dependent street name display color control signals, the display system to display the respective street names in colors that are substantially the same colors as appearing on the real street direction signs of the respective country.

An embodiment of the fourth aspect of the invention comprises the steps of storing country data in the digital map information memory in addition to the street type data and the street name data, converting the street type data into turn direction arrow display color control signals depending on the country data, and controlling, on the basis of said country data dependent turn direction arrow display color control signals, the display system to display the respective turn direction arrow in colors that are substantially the same colors as appearing on the real street direction signs of the respective country.

Any of the above-mentioned embodiments of the fourth aspect of the invention can be combined with the fourth aspect of the invention and/or with each other.

The method of the fourth aspect of the invention and of any of the embodiments thereof can be used for displaying navigation guidance and/or maneuver lists on a display screen belonging to a vehicle navigation system arranged in a vehicle or belonging to a computer of the above-mentioned types, a mobile phone or the like used inside or outside a vehicle for maneuver list visualisation and/or for navigation guidance visualisation.

In the context of the present invention, the term street name is related to the names given to streets like motorways (in Germany: Autobahn), highways (in Germany: Bundesstrassen), regional roads (in Germany: Landstrassen) etc. Usually, such streets are named by a letter plus a number. Examples for Germany are A8 for the particular Autobahn number 8, B470 for the particular Bundesstrasse number 470, and L1234 for the particular Landstrasse 1234.

Street direction signs usually indicate the street name (e.g., in case of motorways and highways in Germany, a street type letter plus a street name number). Often is added the name of a city which can be reached on that street. Street direction signs before intersections usually comprise turn direction arrow marks, the street names of the streets branching off from the intersection and the names of cities which can be reached by the branches.

The background colors, character colors and arrow mark colors of street direction signs are differently standardized for different street types. Such color coding may be different for different countries.

As a first example, street type color coding in Germany is considered: motorway signs have a blue background color and the characters of the motorway numbers, the names of cities reachable on a particular motorway and lane arrow marks are in white color. In highway street direction signs, the background color is yellow and the color of characters and turn direction arrow marks is black. in regional street direction signs, the background color is white and the color of characters and turn direction arrow marks is black. The characters of the names of cities indicated on street direction signs as cities which can be reached when following a particular street, are indicated in the same color as the street name characters.

Another example is the street type color coding in France: motorways (Autoroutes) show city name characters in white color on blue colored background and the street names (e.g. A4) are shown in white color on red background. Street direction signs for French highways (Routes Nationales) show city name characters in white color on green colored background and the street names (e.g. N7) are shown in white color on red background.

According to the present invention, street names, city names and turn direction arrow marks are displayed on the current and next street name display parts and on the turn direction arrow mark display part of the navigation display screen in the same character, turn direction arrow mark and background colors as they are seen on the street direction signs of a particular street type. It is, therefore, very easy for the driver to assign the displays in the current and next street display parts on the navigation display screen to the street information on a real street intersection sign installed adjacent the street on which the vehicle is currently driving. In many cases, it would not even be necessary to exactly read the full information displayed on the current and next street display parts of the navigation display screen, but it will be sufficient to have a short glance at the display screen to compare the displayed information with the real street direction sign information on the basis of the display colors. Thus, the time the driver is distracted from observing the traffic can be drastically shorter compared to prior art navigation systems.

As the next street information is the most important information when approaching an intersection, there is already a considerable improvement if only the next street information is displayed in the same color as appearing on a real street direction sign indicating the next street, without displaying current street information as well. An even higher improvement is obtained if the navigation display screen is provided to display on separate display parts next street information as well as current street information in substantially the same colors as appearing on real street direction signs indicating current and next streets.

As an alternative or in addition to the next street information or the current and next street information displayed on the next street and current display parts, there can be displayed on a turn direction arrow display part a turn direction arrow mark on a turn direction arrow mark background. The color in which the turn direction arrow mark is displayed is substantially the same color as the background color appearing on the real street direction sign indicating the next street. The background color of the turn direction arrow mark background is substantially the same as the background color appearing on the real street direction sign indicating the current street.

In an embodiment of the invention, the navigation system comprises a digital map information memory adapted to store street name data and street type data, and converting means adapted to convert the street type data into street name display color control signals controlling the display system to display the respective street names in substantially the same colors as appearing on the real street direction signs indicating the respective street names.

In such an embodiment, digital map data are read from a digital map storing medium such as a DVD-ROM, a CD-ROM, a HDD (Hard Disk Drive), a memory card, a memory stick, etc. Said digital map data are related to the environment of the current position of the vehicle. On the basis of the street type data read into the map information memory, the converting means processes the street type data to control signals controlling the display screen to display street information on the next street and current street display parts in the colors appearing on a real street direction sign, in accordance with the street direction sign colors standardized for real street direction signs of the particular street type.

In an embodiment of the invention, the digital map information memory is adapted to store country data in addition to the street type data and the street name data so that the converting means can control the navigation display screen to display on the next street display part and, if existent, on the current street display part and the turn direction arrow display part, the characters, arrow mark and background in colors that are substantially the same colors as appearing on street direction signs in the particular country (e.g. Germany or France) for the particular street type (e.g. motorway). With that embodiment, the standardized colors appearing on street direction signs of a particular street type are correctly displayed on the navigation display screen even if the driver changes from one country (e.g. Germany) to another country (e.g. France).

The route display system and the route display method of the present invention are, however, useful not only for vehicle navigation route guidance visualisation but also for road book or maneuver list visualisation for displaying street lists on a display screen. The display screen belongs to a vehicle navigation system mounted or positioned in a vehicle, or it belongs to a computer such as a PC, a notebook, a laptop, a PDA, a mobile phone, or the like, used inside or outside a vehicle. The vehicle navigation system and the computer mobile phone, or the like, respectively, are adapted to display navigation guidance information and/or maneuver lists. The vehicle navigation system and the computer, mobile phone, or the like, adapted to display maneuver lists, is designed to perform route searches and route calculations by entering into the computer a start location and a destination whereupon the navigation system, or mobile phone controls the display screen to display a maneuver list or road book listing street names to be taken, possibly along with turn direction arrow marks displayed adjacent to each street displayed in the maneuver list. In prior art maneuver lists, all streets shown therein are displayed in the same color which also applies for the turn direction arrow marks in case they are also displayed. In case of the present invention, the streets shown in the maneuver list are displayed in characters and background colors that are substantially the same colors as appearing on real street direction signs of the respective street type. Thus, it is much easier to recognize the street type of a particular street in the maneuver list and to assign to real street direction signs and street types each particular street in the maneuver list. This is particularly helpful if the display screen displaying the maneuver list is the display screen of a notebook or PDA used by the driver for navigation guidance during driving, or if the driver uses a color printout of the maneuver list showing the streets in the colors standardized for the particular street and appearing on street direction signs for the particular street type.

### BRIEF DESCRIPTION OF THE DRAWINGS

The invention is now explained in more detail by means of embodiments and accompanying drawings.
Fig. 1 is a schematic diagram illustrating an embodiment of a vehicle navigation system;
Fig. 2 is a schematic diagram illustrating a map information memory, a look-up table, a display screen, and a display color control unit suitable for controlling current street, next street and turn direction arrow display parts of the navigation display in accordance with the invention;
Fig. 3 is a table indicating color combinations used for four types of streets in Germany, France and Italy;
Fig. 4 indicates the correspondence between black and white patterns used in the drawings of Figs. 5-12 and colors displayed on a real display screen according to the invention;
Fig. 5 shows an example of real street direction signs and current and next street displays on a navigation display screen if the current street as well as the next street are German motorways;
Fig. 6 shows an example of a real street direction sign and current and next street displays on a navigation display screen if the current street is a German highway and the next street turning to the right is a German motorway;
Fig. 7 shows an example of a real street direction sign and current and next street displays on a navigation display screen if the current street is a German regional road and the next street turning to the right is a German motorway;
Fig. 8 shows an example of real street direction signs and current and next street displays on a navigation display screen if the current street as well as the next street are French motorways;
Fig. 9 shows the navigation display screen of the example shown in Fig. 7 with an additional turn direction arrow display part displaying a turn direction arrow mark in a corner position on the display screen;
Fig. 10 shows the navigation display screen of the example shown in Fig. 7 with an additional turn direction arrow display part displaying a magnified turn direction arrow mark in a central position where it is superposed to a large part of the guidance map display part of the display screen;
Fig. 11 shows examples for turn direction arrow mark and arrow background display colors for German street type color coding; and
Fig. 12 shows a maneuver list or road book with color displays according to the present invention.

### DESCRIPTION OF EMBODIMENTS

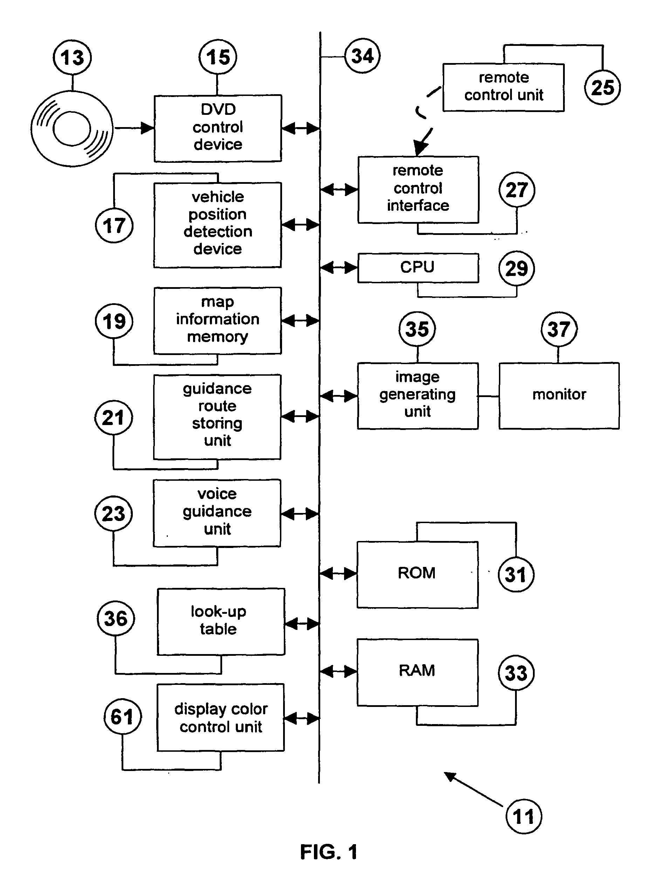

Fig. 1 is a diagram illustrating the construction of an embodiment of a navigation system 11 according to the present invention. The navigation system 11 includes a DVD-ROM 13, (or any of the above-mentioned other memory types), serving as a map storage medium for storing a digital map, a DVD control device 15 for reading out the predetermined map from the DVD-ROM 13 (in the following shortly named DVD), and a vehicle position detection device 17 for detecting a vehicle position. The position detection device 17 has a range sensor for generating a pulse every time the vehicle passes through a predetermined distance, an angle sensor for measuring the driving direction of the vehicle, and a global positioning system (GPS) receiving unit. Further, the navigation system 11 includes a map information memory 19 for storing digital map information read from the DVD 13, a guidance route storing unit 21 for storing information related to the searched guidance route to the destination, optionally a voice guidance unit 23 for guiding the recommended traveling direction at an intersection by voice, optionally a remote control unit 25 for entering inputs such as menu selection, map scrolling, search for a route to the destination, or the like, and optionally as well a remote control interface 27. The navigation system 11 includes further a processor (CPU) 29 for controlling the overall operation of the navigation system in accordance with the stored programs, a ROM 31 for storing a guidance route search program, an arrow-guidance control program, and the like, a RAM 33 for storing processed results, an image generating unit 35 for generating a guidance image based on the map information and the guidance route data, and a monitor 37. The digital map information stored in the map information memory 19 includes street type data, street name data, and country name data. The navigation system 11 comprises a look-up table 36 for converting said street type data and country name data into color control signals, and a display color control unit 61 for controlling the display screen of the monitor 37 to display on the current street, next street and turn direction arrow display parts of the display screen the current street names, the next street names, turn direction arrow marks and their respective backgrounds in colors that are substantially the same colors as they appear on real street direction signs related to the particular street type data and country name data obtained from the map information memory 19. All of the above-mentioned components of the navigation system are connected via a data bus 34 under control of the CPU 29.

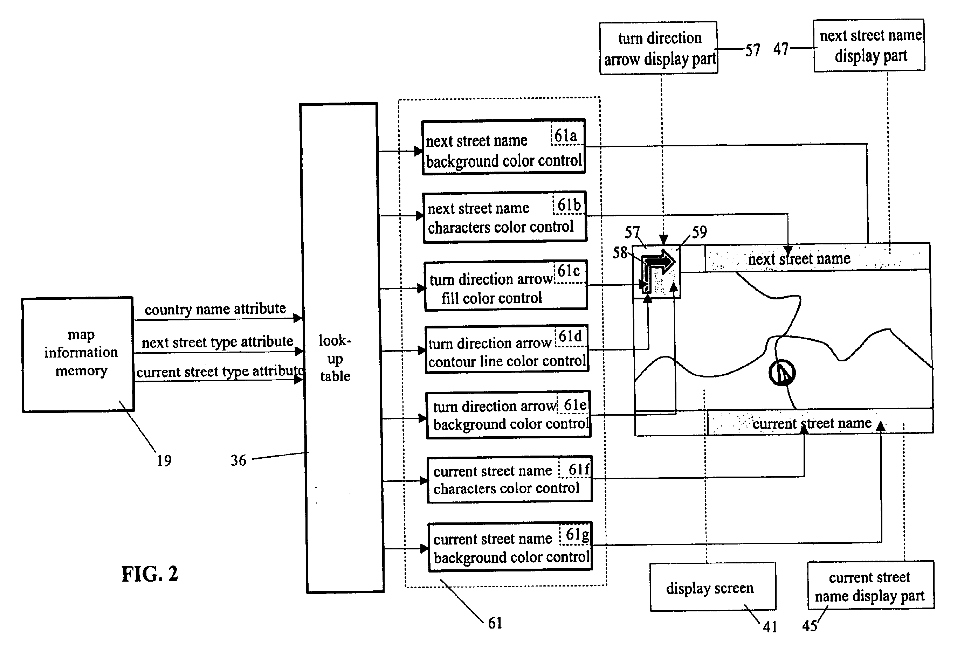

Fig. 2 is a schematic diagram of that part of the vehicle navigation system of the invention which generates current street name, next street name and turn direction arrow displays in colors according to the invention.

Before explaining in more detail the operation of the look-up table 36 and the display color control unit 61 with the aide of Fig. 2, the current street, next street and turn direction arrow displays on the display screen of the monitor 37 with colors depending on the particular street types in accordance with the present invention will be illustrated first.

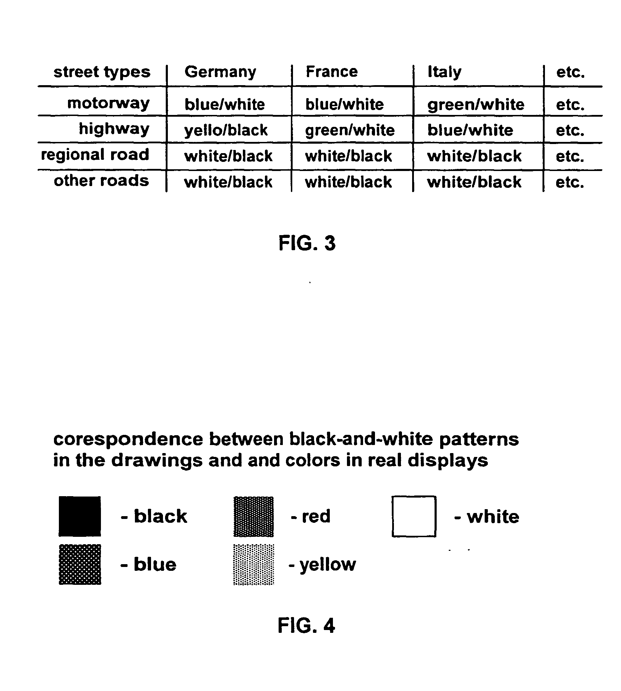

Examples of standardized real street direction sign color codings for different street types are shown in the table of Fig. 3 for Germany, France and Italy. The first column of this table contains different street types such as motorway, highway, regional road and other roads. Columns 2 to 4 indicate the background color street name characters color as standardized for the respective street type in Germany, France and Italy, respectively.

The color display system and the color display method according to the present invention are, however, applicable not only in Germany, France and Italy but in all countries of the world where different street types are indicated on real street direction signs in standardized different color codings.

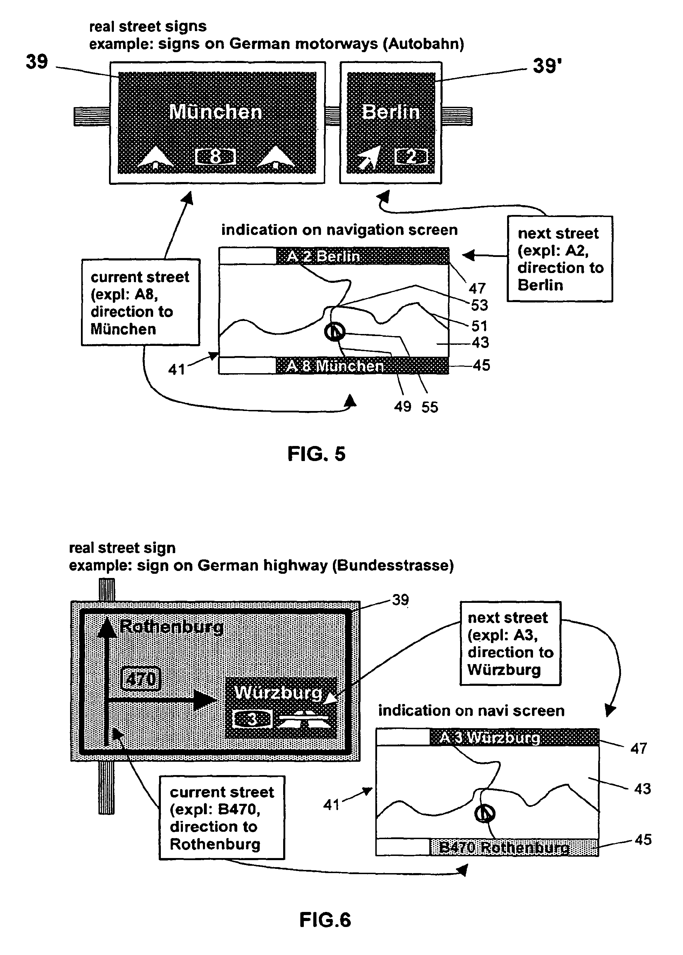

In the examples illustrated in black-and-white in Figs. 5-12, different colors are represented by different black-and-white patterns in accordance with the correspondence table of Fig. 4.

Figs. 5-10 each show a navigation display screen 41 comprising a guidance map display part 43, a current street display part 45 and a next street display part 47. The guidance map display part 43 displays streets including a current street 49, a next street 51 and a vehicle mark 55 approaching an intersection 53. In the embodiment shown in Figures 5-10, the current street display part 45 is positioned at the lower edge of the display screen 41 and the next street display part 47 is positioned at the upper edge of the display screen 41. The display parts 45 and 47 can, however, be differently positioned on the navigation display screen 41.

Figs. 5-8 show in addition at least one real street direction sign 39.

The real street direction sign 39 shown in Fig. 5 is an example for a German motorway street direction sign showing in white color the motorway number 8, the city name of Munich and two arrows each related to one of two lanes of the motorway. The background color of the motorway street direction sign 39 is blue (cf. the black and white pattern in the left column, second line in Fig. 4).

There is a second real street direction sign 39' which is a German motorway street direction sign as well and which is related to a ramp lane for accessing German motorway named A2 leading to the city of Berlin. The colors of real street direction sign 39' are those of German motorway street direction signs as well, i.e. characters, motorway number and direction arrow are shown in white color on blue background color.

In accordance with the teaching of the present invention, the current street display part 45 of the navigation display screen 41 displays the motorway named A8 and the city of Munich in white characters on blue background color, and the next street display part 47 displays the motorway named A2 and the letters of Berlin in white color on blue background color.

A driver passing the real street direction signs 39 and 39' and looking at the navigation display screen 41 very easily recognizes that he is on the motorway indicated on real street direction sign 39 and has to leave the current motorway (motorway A8) to enter another motorway (motorway A2) leading to Berlin, in consistency with the indication on real street direction sign 39'.

In the example of Fig. 6, the navigation display screen 41 guides the driver to change at the next intersection from the German highway named B470 leading to Rothenburg, to the German motorway named A3 leading to Würzburg. According to the standardized colors for different street types, real street direction sign 39 of Fig. 6 shows the highway number 470, the characters of the city of Rothenburg and the intersection arrow mark in black color on yellow background color (cf. the black-and-white pattern in the second column, second line in Fig. 4), and the motorway number 3, a motorway icon and the characters of the city of Würzburg in white color on blue background color. Thus, the driver recognizes from the real street direction sign 39 that he will follow highway B470, leading to Rothenburg, if he does not leave highway B470, and that he will reach motorway A3 if he makes a right hand turn at the next intersection. Corresponding information can be gathered from the display screen 41 of Fig. 6 according to which the current street is a German highway having the highway name B470, and this highway is to be left at the approaching intersection to reach a German motorway having the motorway name A3 and leading to Würzburg. Thus, it is very easy for the driver to recognize from the navigation display screen 41 that he has to change from a highway to a motorway, in accordance to the information indicated on the real street direction sign 39.

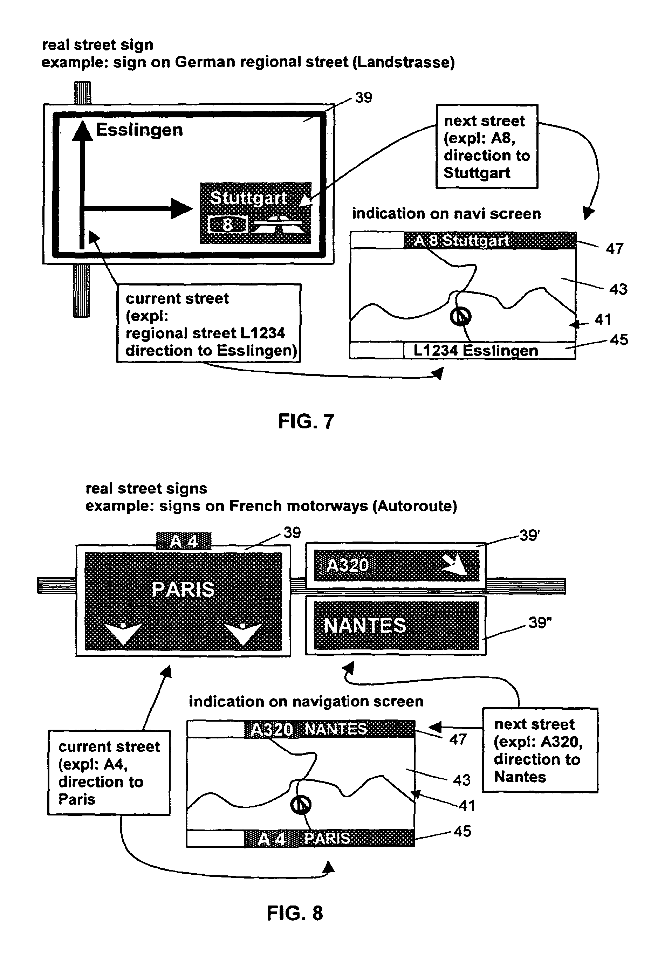

Fig. 7 shows an example wherein the driver is guided to change from regional road L1234 leading to Esslingen to motorway A8 leading to Stuttgart when the vehicle reaches the approaching intersection. In accordance with the colors on the real regional street direction sign 39, the current street display part 45 of the navigation display screen 41 the regional street name L1234 and the city name of Esslingen in black characters on white background color and the next street display part 47 displays motorway A8 and the characters of the city of Stuttgart in white color on blue background color.

Fig. 8 shows an example of street direction signs 39, 39' and 39" and navigation guidance display in France for the case that the driver is guided by the navigation system to leave the current French motorway named A4 leading to Paris to change to French motorway named A320 leading to Nantes. According to French standards, French motorway street direction signs show city names and lane arrows in white color on blue background color, whereas motorway names are shown in white color on red background color (cf. the black-and-white pattern in the second column, first line in Fig. 4). Thus, the information given to the driver when passing street direction signs 39, 39' and 39" is that the driver is on motorway A4 to Paris and reaches motorway A320 to Nantes if he leaves motorway A4.

Corresponding information is displayed on the navigation display screen 41. The current street display part 45 shows the characters of the city of Paris in white color on blue background color and the motorway name A4 in white color on red background color. The next street display part 47 of the display screen 41 shows the letters of the city of Nantes in white color on blue background color and the motorway name A320 leading to Nantes in white color on red background. Thus, also in this case, the current street information and the next street information on the display screen 41 is in consistency with the colors on the real street direction signs 39, 39' and 39".

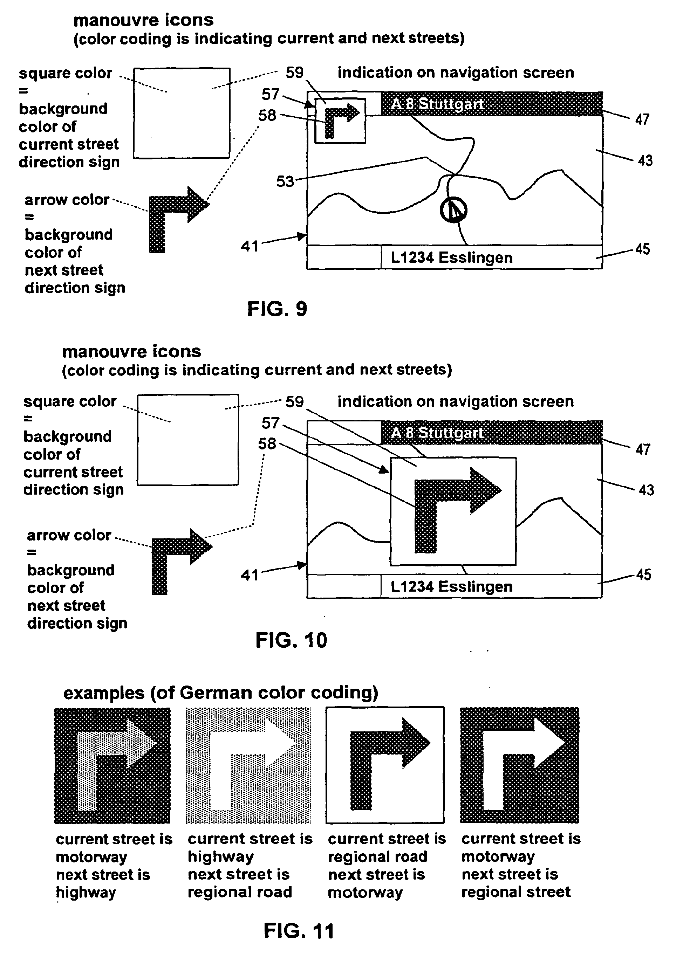

Fig. 9 shows an example similar to the example of Fig. 7, however with a separate turn direction arrow display part 57 at the left hand top corner of display screen 41. The turn direction arrow display part 57 is designed to show a turn direction arrow mark 58 on a turn direction arrow background 59. According to an embodiment of the invention, the color of the turn direction arrow background 59 is a color that is substantially the same color as the background color appearing on the real street direction sign indicating the current street, whereas the color of the arrow mark 58 is a color that is substantially the same color as appearing as background color on the real street direction sign indicating the next street to be followed at the approaching intersection.

The display screen 41 of Fig. 9 is related to the real street direction sign 39 in Fig. 7. Accordingly, the colors, street numbers and city names in the current and next street display parts 45 and 47 in Fig. 9 are the same as appearing on the real street direction sign 39 in Fig. 7.

The colors in which the arrow mark 58 and the arrow background 59 are displayed make it even easier for the driver to recognize in a very short glance that the navigation guidance wants him to change from the current German regional road to a motorway as the next street at the approaching intersection.

In modified embodiments, the arrow display part 57 is positioned at other positions on the display screen 41 than shown in Fig. 9. An example of such a modified embodiment is shown in Fig. 10 where the arrow mark 58 and the arrow background 59 are superposed in larger scale on the center of the guidance map display part 43 as soon as the vehicle comes closer than a predetermined threshold distance to an approaching intersection.

Fig. 11 illustrates examples of different color combinations for the arrow mark 58 and the arrow background 59 for changes from different current street types to different next street types. The colors expressed in the black and white illustrations in Fig. 11 can be taken from the color pattern list of Fig. 4.

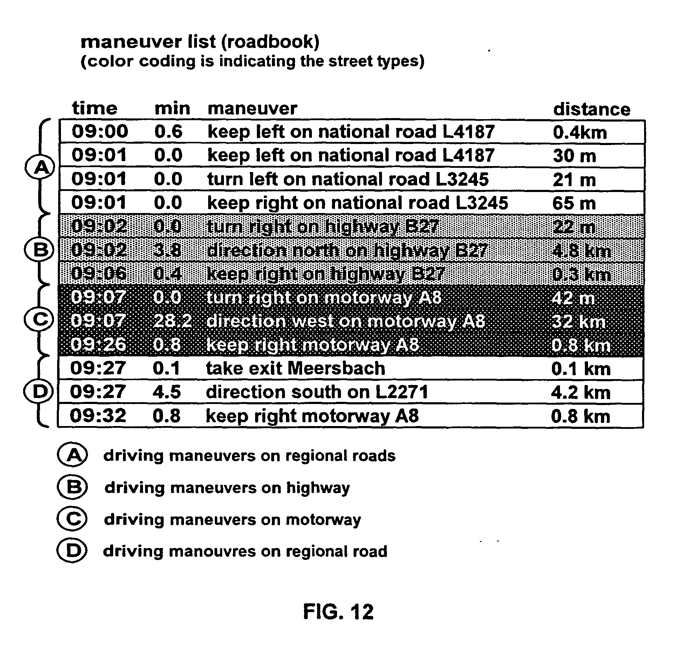

Fig. 12 shows an example of a maneuver list or road book appearing on a display screen 1 of a vehicle navigation system mounted or positioned in a vehicle or a computer of the above-mentioned types, mobile phone, or the like, used inside or outside a vehicle. The road book or maneuver list displays a list of streets of a route between a start position and a destination, calculated and proposed by a computer controlled by route search software. Different from prior art type displays of such maneuver lists where all streets on the list are displayed in the same characters color and the same background color, the maneuver list obtained by the present invention displays the street name characters and the background colors in the same colors as they appear on real street direction signs of the respective street type. Accordingly, the driving maneuvers grouped into groups A and D, related to regional roads, are displayed with black street name characters on white background, the driving maneuvers of group B, related to highways, are displayed with black street name characters on yellow background, and the driving maneuvers of group C, related to motorways, are displayed with white street name characters on blue background.

The maneuver list on Fig. 12 can be displayed either on the display screen of a navigation system or on the display screen of a computer (PC, notebook, laptop, PDA, mobile phone, or the like), or it can be a color printout of the maneuver list generated by such a computer.

Returning now to Fig. 2, the digital data for displaying the guidance information on the display screen 41 of the monitor are read into the map information memory 19 from the DVD 13 (or other memory media such as CD-ROM, HDD, memory card, memory stick, etc) by means of the DVD control device 15 of Fig. 1. The guidance information data read into the map information memory 19 comprise street type attributes, street name attributes, and country name attributes. That attributes are extracted from the map information stored in the map information memory 19 and are input into a converting unit, in case of the embodiment of Fig. 2 the look-up table 36. Output signals of the look-up table 36 are supplied to a color control unit 61 generating color control signals supplied to the display parts 45, 47 and 57. The look-up table 36 and the color control unit 61 belong to the image generating unit 35 of Fig. 1.

The color control unit 61 comprises a next street name background color control sub-unit 61a controlling the background color displayed on the next street name display part 47, a next street name characters color control sub-unit 61 b controlling the color of the next street name characters displayed on next street name display part 47, a turn direction arrow fill color control sub-unit 61c controlling the turn direction arrow fill color displayed on turn direction arrow display part 57, a turn direction arrow contour line color control sub-unit 61 d controlling the color of the turn direction arrow contour line displayed on turn direction arrow display part 57, a turn direction arrow background color control sub-unit 61 e controlling the background color displayed on turn direction arrow display part 57, a current street name characters color control sub-unit 61f controlling the color of the next street name characters displayed on current name display part 45, and a current street name background color control sub-unit 61 g controlling the background color displayed on the current street name display part 45.

In the display examples of Figs. 9-11, the arrow contour line is not used for information display, could however be used for displaying a further color related to real street direction signs in particular countries, or could be used for displaying color information which in the display examples of Figs. 9-11 is displayed by the color of the arrow mark or the arrow background. If the arrow contour line is not used for information display, the turn direction arrow contour line color control sub-unit 61d of Fig. 2 may be omitted.

The colors displayed on the display parts 45, 47 and 57 are controlled in response to the particular country name, next street type and current street type attributes to display the characters and background colors in accordance with the illustrations in Fig. 5 to 12.

As an example, in Germany, the letters of the street names contain the information as to the particular street type and the numbers of the street names designate a particular street of the respective street type. In case of a motorway, the motorway street type is detected from the letter A of the street name. In case of a highway, the highway street type is detected from the letter B of the street name. In case of a regional road, the regional road street type is detected from the letter L of the street name. Said street name letters are contained in the digital map data read into the map information memory 19 (Figures 1 and 2).

The main function of the look-up table 36 is to output color control signals in response to the input country name, next street type and current street type attributes in accordance with the color table of Fig. 3 such that the character colors, arrow mark colors and background colors displayed on display parts 45, 47 and 57 are colors that are substantially the same colors as appearing on real current and next street direction signs in a particular country according to the country name attribute.

In the above embodiments, color control signals for displaying street names, arrow marks and associated backgrounds in colors that are substantially the same as appearing on real street direction signs, are generated by extracting from a digital map data base (e.g. available on a DVD) country name and street type attributes and converting them into display color control signals.

According to another embodiment, the digital map data base (e.g. stored on the DVD) already contains street type color code attributes for displaying street names in colors that are substantially the same colors as they appear on real street direction signs. In this case, the electronic route display system of the present invention does not need the conversion means for converting street type attributes into display color control signals. The street type color code attributes read from the digital map data base can be decoded directly to control the image generating unit 35 to display street names in colors that are substantially the same colors as they appear on real street direction signs.

## Claims

1. Electronic route display system comprising a guidance map display part (43) and a separate next street name display part (47) on a display screen (41), the display system being adapted to display on the guidance map display part (43) a guidance route map and to display on the next street name display part (47) the next street name in background and character colors that are substantially the same colors as appearing on a real street direction sign (39, 39', 39") indicating the next street name.

2. Electronic route display system according to claim 1, wherein the display system comprises a current street name display part (45) on said display screen (41), the display system being adapted to display on the current street name display part (45) the current street name in background and character colors that are substantially the same colors as appearing on a real street direction sign (39, 39', 39") indicating the current street name.

3. Electronic route display system according to claim 1 or 2, comprising a turn direction arrow display part on the display screen (41), the display system being adapted to display on the turn direction arrow display part (57) a turn direction arrow (58) in a color that is substantially the same color as the background color appearing on said real street direction sign (39, 39', 39") indicating the next street name.

4. Electronic route display system according to claim 3, wherein the turn direction arrow display part (57) is designed to display on the display screen (41) the turn direction arrow (58) on an arrow background (59), the display system being adapted to display on the turn direction arrow display part (57) the turn direction arrow (58) in a color that is substantially the same color as the background color of the next street name appearing on said real street direction sign (39, 39', 39") indicating the next street and to display the arrow background (59) in substantially the same color as the background color appearing on said real street direction sign (39, 39', 39") indicating the current street.

5. Electronic route display system according to any of claims 1 to 4 , comprising:
a digital map information memory (19) adapted to store street type data and street name data;
converting means adapted to convert the street type data into street name display color control signals controlling the display system to display the respective street names in colors that are substantially the same colors as appearing on the real street direction signs (39, 39', 39") indicating said respective street names.

6. Electronic route display system according to claim 5, wherein the converting means is adapted to convert the street type data into turn direction arrow display color control signals controlling the display system to display the turn direction arrow (58) in a color that is substantially the same color as appearing on the real street direction sign (39, 39', 39") indicating the next street.

7. Electronic route display system according to claim 5 or 9 wherein the digital map information memory is adapted to store country data in addition to street type data and street name data;
wherein the converting means is adapted to use the country data to convert the street type data into street name display color control signals controlling the display system in dependency on the respective country data to display the respective street names in a colors that are substantially the same colors as appearing on the real street direction signs (39, 39', 39") of the respective country.

8. Electronic route display system according to any of claims 5 to 7 wherein the digital map information memory is adapted to store country data in addition to the street name data and the street type data;
wherein the converting means is adapted to use the country data to convert the street type data into turn direction arrow display color control signals controlling the display system in dependency of the respective country data to display the respective turn direction arrow (58) in a colors that are substantially the same colors as appearing on the real street direction signs (39, 39', 39") of the respective country.

9. Electronic route display system according to any of claims 5 to 8, wherein the digital map information memory (19) is adapted to store street type data, street name data, and street color coding data; and
the converting means is adapted to convert the street color coding data into street name display color control signals controlling the display system to display the respective street names in colors that are substantially the same colors as appearing on the real street direction signs (39, 39', 39") indicating said respective street names.

10. Vehicle navigation system comprising an electronic route display system according to any of claims 1 to 9.

11. Computer system comprising an electronic route display system according to any of claims 1 to 9.

12. The system of claim 10 or 11 adapted to be software controlled to calculate a route between an entered start position and an entered destination and to display on a display screen (41) a maneuver list of the calculated route comprising street names, wherein the street names of the maneuver list are displayed in background and character colors that are substantially the same colors as appearing on the real street direction signs (39, 39', 39") indicating the respective street name of the maneuver list.

13. Electronic route display method comprising the steps of generating a guidance map display on a guidance map display part (43) of a display screen (41) and of generating a next street name display on a separate next street name display part (47) on the display screen (41) in background and character colors that are substantially the same colors as appearing on a real street direction sign (39, 39', 39") indicating the next street name.

14. Method according to claim 13, comprising the step of generating a current street name display on a current street name display part (45) on said display screen (41) in background and character colors that is are substantially the same colors as appearing on a real street direction sign (39, 39', 39") indicating the current street name.

15. Method according to claim 13 or 14, comprising the step of generating a turn direction arrow display on a turn direction arrow display part (57) on the display screen (41), the turn direction arrow (58) being displayed in a color that is substantially the same color as the background color appearing on said real street direction sign (39, 39', 39") indicating the next street name.

16. Method according to any of claims 13 to 15, comprising the steps of:
storing street type data and street name data in a digital map information memory;
converting the street type data into street name display color control signals; and
controlling, in response to the street name display color control signals, the display system to display the respective street names in colors that are substantially the same colors as appearing on the real street direction signs (39, 39', 39") indicating said respective street names.

## Patentansprüche

1. Elektronisches Fahrweganzeigesystem, das einen Führungskarten-Anzeigeteil (43) und einen separaten Anzeigeteil (47) für den nächsten Straßennamen auf einen Anzeigeschirm (41) aufweist, wobei das Anzeigesystem dazu ausgebildet ist, in dem Führungskarten-Anzeigeteil (43) eine Führungsrouten-Karte anzuzeigen sowie in dem für den nächsten Straßennamen vorgesehenen Anzeigeteil (47) den nächsten Straßennamen anzuzeigen, und zwar in Hintergrund- und Zeichenfarben, die im Wesentlichen die gleichen Farben aufweisen, wie diese auf einem den nächsten Straßennamen anzeigenden echten Straßenrichtungs-Wegweiser (39, 39', 39") erscheinen.

2. Elektronisches Fahrweganzeigesystem nach Anspruch 1,
wobei das Anzeigesystem einen Anzeigeteil (45) für den aktuellen Straßenname auf dem Anzeigeschirm (41) aufweist, wobei das Anzeigesystem dazu ausgebildet ist, auf dem für den aktuellen Straßennamen vorgesehenen Anzeigeteil den aktuellen Straßennamen in Hintergrund- und Zeichenfarben anzuzeigen, die im Wesentlichen die gleichen Farben aufweisen, wie diese auf einem den aktuellen Straßennamen anzeigenden echten Straßenwegweiser (39, 39', 39") erscheinen.

3. Elektronisches Fahrweganzeigesystem nach Anspruch 1 oder 2,
mit einem Abbiegerichtungspfeil-Anzeigeteil auf dem Anzeigeschirm (41), wobei das Anzeigesysem dazu ausgebildet ist, in dem Abbiegerichtungspfeil-Anzeigeteil (57) einen Abbiegerichtungspfeil (58) in einer Farbe anzuzeigen, die im Wesentliche die gleiche Farbe wie die Hintergrundfarbe aufweist, die auf dem den nächsten Straßennamen anzeigenden echten Straßenwegweiser (39, 39', 39") erscheint.

4. Elektronisches Fahrweganzeigesystem nach Anspruch 3,
wobei der Abbieberichtungspfeil-Anzeigeteil (57) dazu ausgebildet ist, auf dem Anzeigeschirm (41) den Abbiegerichtungspfeil (58) auf einem Pfeilhintergrund (59) anzuzeigen, wobei das Anzeigesystem dazu ausgebildet ist, in dem Abbiegerichtungspfeil-Anzeigeteil (57) den Abbiegerichtungspfeil (58) in einer Farbe anzuzeigen, die im Wesentlichen die gleiche Farbe wie die Hintergrundfarbe des nächsten Straßennamens aufweist, der auf dem die nächste Straße anzeigenden echten Straßenwegweiser (39, 39', 39") erscheint, sowie den Pfeilhintergrund (59) im Wesentlichen in der gleichen Farbe wie die Hintergrundfarbe anzuzeigen, die auf dem die aktuelle Straße anzeigenden echten Straßenwegweiser (39, 39', 39") erscheint.

5. Elektronisches Fahrweganzeigesystem nach einem der Ansprüche 1 bis 4, aufweisend:
einen digitalen Karteninformationsspeicher (19), der zum Speichern von Straßentyp-Daten und von Straßennamen-Daten ausgebildet ist;
eine Umwandlungseinrichtung, die dazu ausgebildet ist, die Straßentyp-Daten in Straßennamen-Anzeigefarben-Steuersignale umzuwandeln, die das Anzeigesystem zum Anzeigen der jeweiligen Straßennamen in Farben steuern, die im Wesentlichen die gleichen Farben aufweisen, wie diese auf den die jeweiligen Straßennamen anzeigenden echten Straßenwegweisern (39, 39', 39") erscheinen.

6. Elektronisches Fahrweganzeigesystem nach Anspruch 5,
wobei die Umwandlungseinrichtung dazu ausgebildet ist, die Straßentyp-Daten in Abbiegerichtungspfeil-Anzeigefarben-Steuersignale umzuwandeln, die das Anzeigesystem zum Anzeigen des Abbiegerichtungspfeils (58) in einer Farbe steuern, die im Wesentlichen die gleiche Farbe aufweist, wie diese auf dem die nächste Straße anzeigenden echten Straßenwegweiser (39, 39', 39") erscheint.

7. Elektronisches Fahrweganzeigesystem nach Anspruch 5 oder 9,
wobei der digitale Karteninformationsspeicher dazu ausgebildet ist, Länder-Daten zusätzlich zu Straßentyp-Daten und Straßennamen-Daten zu speichern;
wobei die Umwandlungseinrichtung dazu ausgebildet ist, die Länder-Daten zum Umwandeln der Straßentyp-Daten in Straßennamen-Anzeigefarben-Steuersignale zu nutzen, die das Anzeigesystem in Abhängigkeit von den jeweiligen Länder-Daten zum Anzeigen der jeweiligen Straßennamen in Farben steuern, die im Wesentlichen die gleichen Farben aufweisen, wie diese auf den echten Straßenwegweisern (39, 39', 39") des jeweiligen Landes erscheinen.

8. Elektronisches Fahrweganzeigesystem nach einem der Ansprüche 5 bis 7,
wobei der digitale Karteninformationsspeicher dazu ausgebildet ist, Länder-Daten zusätzlich zu Straßennamen-Daten und Straßentyp-Daten zu speichern;
wobei die Umwandlungseinrichtung dazu ausgebildet ist, die Länder-Daten zum Umwandeln der Straßentyp-Daten in Abbiegerichtungspfeil-Anzeigefarben-Steuersignale zu nutzen, die das Anzeigesystem in Abhängigkeit von den jeweiligen Länder-Daten zum Anzeigen des jeweiligen Abbiegerichtungspfeils in Farben steuern, die im Wesentlichen die gleichen Farben aufweisen, wie diese auf den echten Straßenwegweisern (39, 39', 39") des jeweiligen Landes erscheinen.

9. Elektronisches Fahrweganzeigesystem nach einem der Ansprüche 5 bis 8,
wobei der digitale Karteninformationsspeicher (19) dazu ausgebildet ist, Straßentyp-Daten, Straßennamen-Daten und Straßenfarbcodierungs-Daten zu speichern;
wobei die Umwandlungseinrichtung dazu ausgebildet ist, die Straßenfarbcodierungs-Daten in Straßennamen-Anzeigefarben-Steuersignale umzuwandeln, die das Anzeigesystem zum Anzeigen der jeweiligen Straßennamen in Farben steuern, die im Wesentlichen die gleichen Farben aufweisen, wie diese auf den die jeweiligen Straßennamen anzeigenden echten Straßenwegweisern (39, 39', 39") erscheinen.

10. Fahrzeugnavigationssystem mit einem elektronischen Fahrweganzeigesystem nach einem der Ansprüche 1 bis 9.

11. Computersystem mit einem elektronischen Fahrweganzeigesystem nach einem der Ansprüche 1 bis 9.

12. System nach Anspruch 10 oder 11, das mittels Software steuerbar ist, um einen Fahrweg zwischen einer eingegebenen Startposition und einem eingegebenen Ziel zu berechnen und um auf einem Anzeigeschirm (41) eine Manöverliste des berechneten Fahrweges anzuzeigen, die Straßennamen beinhaltet, wobei die Straßennamen der Manöverliste in Hintergrund- und Zeichenfarben dargestellt werden, die im Wesentlichen die gleichen Farben aufweisen, wie diese auf den den jeweiligen Straßennamen der Manöverliste anzeigenden echten Straßenwegweisern (39, 39', 39") erscheinen.

13. Elektronisches Fahrweganzeigeverfahren mit folgenden Schritten: Generieren einer Führungskartenanzeige in einem Führungskarten-Anzeigeteil (43) eines Anzeigeschirms (41) und Generieren einer Anzeige des nächsten Straßennamens in einem für den nächsten Straßennamen vorgesehenen, separaten Anzeigeteil (47) auf dem Anzeigeschirm (41) in Hintergrund- und Zeichenfarben, die im Wesentlichen die gleichen sind, wie diese auf einem den nächsten Straßennamen anzeigenden echten Straßenwegweiser (39, 39', 39") erscheinen.

14. Verfahren nach Anspruch 13 mit dem Schritt, in dem eine aktuelle Straßennamenanzeige auf einem für einen aktuellen Straßennamen vorgesehenen Anzeigeteil (45) auf dem Anzeigeschirm (41) in Hintergrund- und Zeichenfarben generiert wird, die im Wesentlichen die Farben aufweisen, wie diese auf einem den aktuellen Straßennamen anzeigenden echten Straßenwegweiser (39, 39', 39") erscheinen.

15. Verfahren nach Anspruch 13 oder 14 mit dem Schritt, in dem eine Abbiegerichtungspfeilanzeige in einem Abbiegerichtungspfeil-Anzeigeteil (57) auf dem Anzeigeschirm (41) generiert wird, wobei der Abbiegerichtungspfeil (58) in einer Farbe angezeigt wird, bei der es sich im Wesentlichen um die gleiche Farbe wie die Hintergrundfarbe handelt, die auf dem den nächsten Straßennamen anzeigenden echten Straßenwegweiser (39, 39', 39") erscheint.

16. Verfahren nach einem der Ansprüche 13 bis 15, das folgende Schritte aufweist:
Speichern von Straßentyp-Daten und Straßennamen-Daten in einem digitalen Karteninformationsspeicher;
Umwandeln der Straßentyp-Daten in Straßennamen-Anzeigefarben-Steuersignale; und
in Abhängigkeit von den Straßennamen-Anzeigefarben-Steuersignalen erfolgendes Steuern des Anzeigesystems zum Anzeigen der jeweiligen Straßennamen in Farben, bei denen es sich im Wesentlichen um die gleichen Farben handelt, wie diese auf den die jeweiligen Straßennamen anzeigenden echten Straßenwegweisern (39, 39', 39") erscheinen.

## Revendications

1. Système électronique d'affichage d'itinéraire comprenant une partie d'affichage de carte de guidage (43) et une partie séparée d'affichage de nom de rue suivant (47) sur un écran d'affichage (41), le système d'affichage étant adapté pour afficher sur la partie d'affichage de carte de guidage (43) une carte d'itinéraire de guidage et pour afficher sur la partie d'affichage de nom de rue suivant (47) le nom de rue suivant dans des couleurs d'arrière-plan et de caractères qui sont substantiellement les mêmes couleurs que celles apparaissant sur un panneau de direction de rue réel (39, 39', 39") indiquant le nom de rue suivant.

2. Système électronique d'affichage d'itinéraire selon la revendication 1, dans lequel le système d'affichage comprend une partie d'affichage de nom de rue courant (45) sur ledit écran d'affichage (41), le système d'affichage étant adapté pour afficher sur la partie d'affichage de nom de rue courant (45) le nom de rue courant dans des couleurs d'arrière-plan et de caractères qui sont substantiellement les mêmes couleurs que celles apparaissant sur un panneau de direction de rue réel (39, 39', 39") indiquant le nom de rue courant.

3. Système électronique d'affichage d'itinéraire selon la revendication 1 ou 2, comprenant une partie d'affichage de flèches de direction sur l'écran d'affichage (41), le système d'affichage étant adapté pour afficher sur la partie d'affichage de flèches de direction (57) une flèche de direction (58) dans une couleur qui est substantiellement la même couleur que la couleur d'arrière-plan apparaissant sur ledit panneau de direction de rue réel (39, 39', 39") indiquant le nom de rue suivant.

4. Système électronique d'affichage d'itinéraire selon la revendication 3, dans lequel la partie d'affichage de flèches de direction (57) est conçue pour afficher sur l'écran d'affichage (41) la flèche de direction (58) sur un arrière-plan de flèche (59), le système d'affichage étant adapté pour afficher sur la partie d'affichage de flèches de direction (57) la flèche de direction (58) dans une couleur qui est substantiellement la même couleur que la couleur d'arrière-plan du nom de rue suivant apparaissant sur ledit panneau de direction de rue réel (39, 39', 39") indiquant la rue suivante et pour afficher l'arrière-plan de flèche (59) substantiellement dans la même couleur que la couleur d'arrière-plan apparaissant sur ledit panneau de direction de rue réel (39, 39', 39") indiquant la rue courante.

5. Système électronique d'affichage d'itinéraire selon l'une quelconque des revendications 1 à 4, comprenant :
une mémoire d'information de carte numérique (19) adaptée pour stocker des données de types de rues et des données de noms de rues ;
un moyen de conversion adapté pour convertir les données de types de rues en signaux de commande de couleur d'affichage de noms de rues commandant le système d'affichage pour afficher les noms de rues respectifs dans des couleurs qui sont substantiellement les mêmes couleurs que celles apparaissant sur les panneaux de direction de rue réels (39, 39', 39") indiquant lesdits noms de rues respectifs.

6. Système électronique d'affichage d'itinéraire selon la revendication 5, dans lequel le moyen de conversion est adapté pour convertir les données de types de rues en signaux de commande de couleur d'affichage de flèche de direction commandant le système d'affichage pour afficher la flèche de direction (58) dans une couleur qui est substantiellement la même couleur que celle apparaissant sur le panneau de direction de rue réel (39, 39', 39") indiquant la rue suivante.

7. Système électronique d'affichage d'itinéraire selon la revendication 5 ou 6, dans lequel la mémoire d'information de carte numérique est adaptée pour stocker des données de pays en plus des données de types de rues et des données de noms de rues ;
dans lequel le moyen de conversion est adapté pour utiliser les données de pays pour convertir les données de types de rues en signaux de commande de couleur d'affichage de nom de rue commandant le système d'affichage en fonction des données de pays respectives pour afficher les noms de rues respectifs dans des couleurs qui sont substantiellement les mêmes que les couleurs apparaissant sur les panneaux de direction de rue réels (39, 39', 39") du pays respectif.

8. Système électronique d'affichage d'itinéraire selon l'une quelconque des revendications 5 à 7, dans lequel la mémoire d'information de carte numérique est adaptée pour stocker des données de pays en plus des données de noms de rues et des données de types de rues ;
dans lequel le moyen de conversion est adapté pour utiliser les données de pays pour convertir les données de types de rues en signaux de commande de couleur d'affichage de flèche de direction commandant le système d'affichage en fonction des données de pays respectives pour afficher la flèche de direction (5) respective dans des couleurs qui sont substantiellement les mêmes que les couleurs apparaissant sur les panneaux de direction de rue réels (39, 39', 39") du pays respectif.

9. Système électronique d'affichage d'itinéraire selon l'une quelconque des revendications 5 à 8, dans lequel la mémoire d'information de carte numérique (19) est adaptée pour stocker des données de types de rues, des données de noms de rues et des données de codage de couleurs de rues ; et
le moyen de conversion est adapté pour convertir les données de codage de couleurs de rues en signaux de commande de couleur d'affichage de nom de rue commandant le système d'affichage pour afficher les noms de rues respectifs dans des couleurs qui sont substantiellement les mêmes que les couleurs apparaissant sur les panneaux de direction de rue réels (39, 39', 39") indiquant lesdits noms de rues respectifs.

10. Système de navigation pour véhicules comprenant un système électronique d'affichage d'itinéraire selon l'une quelconque des revendications 1 à 9.

11. Système informatique comprenant un système électronique d'affichage d'itinéraire selon l'une quelconque des revendications 1 à 9.

12. Système selon la revendication 10 ou 11, adapté pour être géré par logiciel pour calculer un itinéraire entre une position de départ saisie et une destination saisie et pour afficher sur un écran d'affichage (41) une liste de manoeuvres de l'itinéraire calculé comprenant des noms de rues, dans lequel les noms de rues de la liste de manoeuvres sont affichés dans des couleurs d'arrière-plan et de caractères qui sont substantiellement les mêmes couleurs que celles apparaissant sur les panneaux de direction de rue réels (39, 39', 39") indiquant les noms de rues respectifs de la liste de manoeuvres.

13. Procédé d'affichage électronique d'itinéraire comprenant les étapes consistant à générer un affichage de carte de guidage sur une partie d'affichage de carte de guidage (43) d'un écran d'affichage (41) et à générer un affichage de nom de rue suivant sur une partie séparée d'affichage de nom de rue suivant (47) sur l'écran d'affichage (41) dans des couleurs d'arrière-plan et de caractères qui sont substantiellement les mêmes couleurs que celles apparaissant sur un panneau de direction de rue réel (39, 39', 39") indiquant le nom de rue suivant.

14. Procédé selon la revendication 13, comprenant l'étape consistant à générer un affichage de nom de rue courant sur une partie d'affichage de nom de rue courant (45) sur ledit écran d'affichage (41), dans des couleurs d'arrière-plan et de caractères qui sont substantiellement les mêmes couleurs que celles apparaissant sur un panneau de direction de rue réel (39, 39', 39") indiquant le nom de rue courant.

15. Procédé selon la revendication 13 ou 14, comprenant l'étape consistant à générer un affichage de flèche de direction sur une partie d'affichage de flèches de direction (57) sur l'écran d'affichage (41), la flèche de direction (58) étant affichée dans une couleur qui est substantiellement la même couleur que la couleur d'arrière-plan apparaissant sur ledit panneau de direction de rue réel (39, 39', 39") indiquant le nom de rue suivant.

16. Procédé selon l'une quelconque des revendications 13 à 15, comprenant les étapes consistant à :
stocker des données des types de rues et des données de noms de rues dans une mémoire d'informations de carte numérique ;
convertir les données de types de rues en signaux de commande de couleur d'affichage de noms de rues ; et
commander, en réponse aux signaux de commande de couleur d'affichage de noms de rues, le système d'affichage pour afficher les noms de rues respectifs dans des couleurs qui sont substantiellement les mêmes couleurs que celles apparaissant sur les panneaux de direction de rue réels (39, 39', 39") indiquant lesdits noms de rues respectifs.
